# EUROPEAN PATENT APPLICATION

(11) **EP 2 725 449 A2**
(43) Date of publication of application: **30.04.2014**
(21) Application number: 13183629.8
(22) Date of filing: 10.09.2013
(51) Int. Cl.: G06F 1/20

(54) **Heat dissipating structure**

(30) Priority: 11.10.2012 US 201261712273 P; 04.01.2013 TW 102100270
(71) Applicant: ASUSTeK Computer Inc., 11259 Taipei (TW)
(72) Inventor: Tsai, Ming-Fang, 11259 Taipei (TW); Ho, Ching, 11259 Taipei (TW); Huang, Yen-Chao, 11259 Taipei (TW); Ma, Chen-Hsuan, 11259 Taipei (TW)
(74) Representative: Scholz, Volker

(57) **Abstract**

A heat dissipating structure is provided and it covers a printed circuit board (PCB) including at least one interface card slot. The heat dissipating structure includes a board, at least one heat sink and at least one interface card opening. The board has a first surface and a second surface which are opposite to each other. The second surface of the board faces the PCB. The heat sink is formed at the first surface of the board. The interface card opening penetrates through the first surface and the second surface of the board, so as to make the interface card slot exposed in the interface card opening.

## Description

### BACKGROUND OF THE INVENTION

### Field of the Invention

The invention relates to a heat dissipating structure and, more particularly, to a heat dissipating structure applied to a motherboard.

### Description of the Related Art

When a computer is in operation, electronic elements, such as a Central Processing Unit (CPU), a north chip or a south chip, a display chip, a capacitor and an inductor, would generate heat. If the heat of the electronic elements is not dissipated effectively, the computer may crash and the motherboard may be damaged, which may result in property loss or hurt the user. Consequently, a heat dissipating module is usually disposed in the computer.

The heat dissipating module has many types, and it may be a fan, a heat sink, a heat pipe and a liquid cooling device. For example, the heat sink can be attached to the surface of the chip. When the temperature of the heat sink is higher than that of the circumstance, the temperature of the chip is reduced, which is called natural convection. The fan and the heat sink can be used together.

The fan is disposed on the heat sink, and it generates wind to take away the heat from the chip, which is called forced convection. The heat pipe includes a capillary structure and water molecules. When the temperature of two ends of the heat pipe is different, the water molecules in the higher temperature are in a gaseous state, and the water molecules in the lower temperature are in a liquid state. The water flows from the place of low temperature to that of high temperature through the capillary structure, so as to cool the heat sink and the chip. The liquid cooling device cools the heat sink and the chip via flowing water.

However, the heat dissipating modules stated above only cool a specific electronic element of the motherboard, such as a chip with a heat sink or a combination of a heat sink and a fan, and other electronic elements (such as a capacitor and an inductor) of the motherboard cannot be cooled just by a single heat dissipating module. Thus, multiple heat dissipating modules are needed to be disposed at the motherboard, which takes much time and cost. Furthermore, the conventional heat dissipating module does not have protection and dust-proof functions, so it cannot extend the service life of the motherboard.

### BRIEF SUMMARY OF THE INVENTION

A heat dissipating structure covering a printed circuit board (PCB) which includes at least an interface card slot is provided.

The heat dissipating structure includes a board, at least a heat sink and at least an interface card opening. The board includes a first surface and a second surface which are opposite to each other, and the second surface faces the PCB. The heat sink is formed at the first surface of the board. The interface card opening penetrates through the first surface and the second surface of the board to make the interface card slot exposed in the interface card opening.

Furthermore, the interface card opening of the heat dissipating structure corresponds to the interface card slot of the PCB. When the heat dissipating structure is assembled to the PCB, the interface card slot is exposed from the interface card opening. Thus, an interface card can be inserted to the interface card opening and be fixed in the interface card slot without blocking of the board of the heat dissipating structure.

The heat dissipating structure can cool multiple heat sources at the PCB at the same time as long as the heat sinks are formed at one side of the board opposite to the heat sources at the PCB. Thus, the number of the conventional heat dissipating modules disposed at the PCB can be reduced, and the time and manpower for assembling can be saved. Moreover, the heat dissipating structure covers the PCB to protect the electronic elements at the PCB, and it has a dustproof function, which extends the service life of the PCB.

These and other features, aspects and advantages of the present invention will become better understood with regard to the following description, appended claims, and accompanying drawings.

### BRIEF DESCRIPTION OF THE DRAWINGS

FIG. 1 is a schematic diagram showing a heat dissipating structure covering a PCB in a first embodiment;

FIG. 2 is an exploded diagram showing the heat dissipating structure and the PCB in FIG. 1;

FIG. 3 is a schematic diagram showing the heat dissipating structure and the PCB of FIG. 1 in use;

FIG. 4 is a schematic diagram showing a heat dissipating structure covering a PCB in a second embodiment;

FIG. 5 is a schematic diagram showing the heat dissipating structure and the PCB of FIG. 4 in use;

FIG. 6 is a schematic diagram showing a heat dissipating structure covering a PCB in a third embodiment;

FIG. 7 is a schematic diagram showing a heat dissipating structure covering a PCB in a fourth embodiment; and

FIG. 8 is a schematic diagram showing a heat dissipating structure covering a PCB in a fifth embodiment.

### DETAILED DESCRIPTION OF THE EMBODIMENTS

A heat dissipating structure is provided and is illustrated with relating figures.

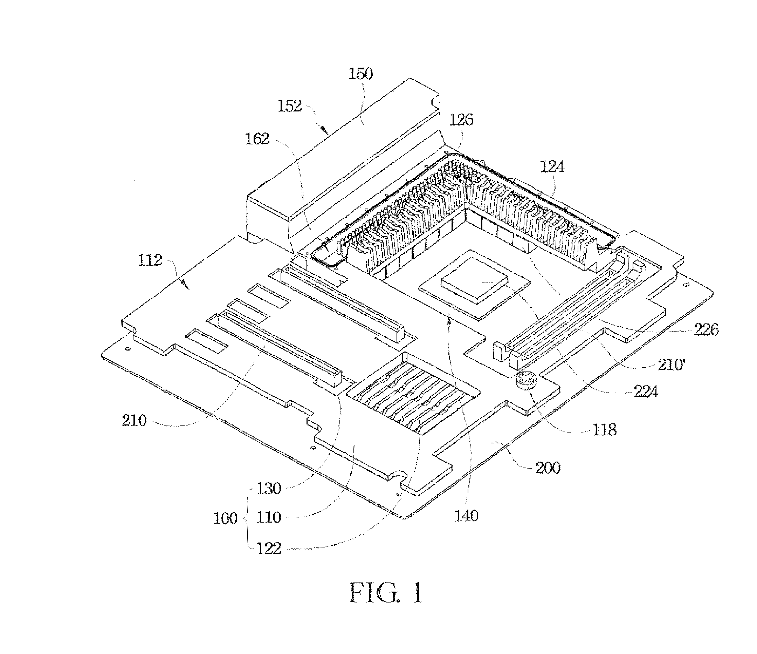

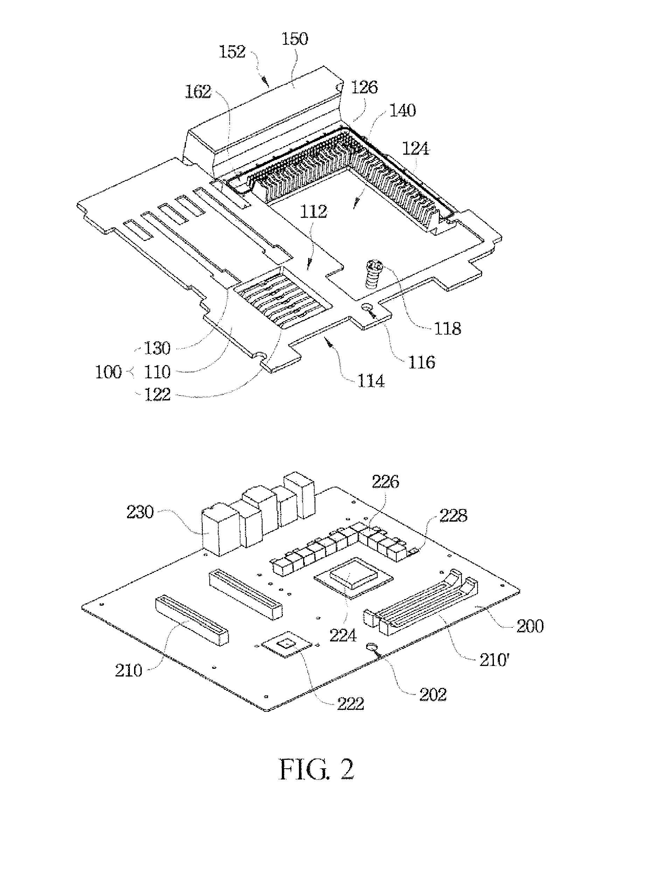

FIG. 1 is a schematic diagram showing a heat dissipating structure 100 covering a PCB 200 in a first embodiment. FIG. 2 is an exploded diagram showing the heat dissipating structure 100 and the PCB 200 in FIG. 1. Please refer to FIG. 1 and FIG. 2, the heat dissipating structure 100 covers the PCB 200. The PCB 200 includes an interface card slot 210, a memory slot 210', a plurality of heat sources and input/output (I/O) ports 230. The interface card slot 210 may selectively include an accelerated graphics port (AGP) slot, a peripheral component interconnect (PCI) slot and a PCI-E slot. The heat sources may include chips 222 and 224, an inductor 226 and a metal oxide semiconductor (MOS) 228. The I/O ports 230 may include an Ethernet connecting port, a universal serial bus (USB) port, a display outputting port (such as high-definition multimedia interface (HDMI) or video graphics array (VGA) and an audio I/O port.

The heat dissipating structure 100 includes a board 110, heat sinks 122, 124 and 126 and the interface card opening 130. The board 110 includes a first surface 112 and a second surface 114. The first surface 112 is back to the PCB 200, and the second surface 114 faces the PCB 200.

The heat sinks 122, 124 and 126 are formed at the first surface 112 of the board 110. The interface card opening 130 penetrates through the first surface 112 and the second surface 114 of the board 110, and the interface card opening 130 is formed corresponding to the interface card slot 210 of the PCB 200. When the heat dissipating structure 100 is assembled to the PCB 200, the interface card slot 210 is exposed in the interface card opening 130.

In the embodiment, the board 110 and the heat sinks 122, 124 and 126 may be are metal (such as aluminum, copper or iron) elements, heat dissipating plastic elements or ceramic elements, which are integratedly formed. The second surface 114 of the board 110 may be coated with an insulation layer to avoid a short circuit between the board 110 and the electronic elements at the PCB 200.

Moreover, the board 110 has a hole 116, and the PCB 200 has a screw hole 202 corresponding to the hole 116. A screw 118 can penetrate through the hole 116 and mesh with the screw hole 202 of the PCB 200 to fix the heat dissipating structure 100 at the PCB 200. However, the heat dissipating structure 100 may also be assembled to the PCB 200 via locking, attaching or welding, which is not limited herein.

Furthermore, the heat dissipating structure 100 further includes an I/O port accommodating part 150. The I/O port accommodating part 150 is disposed at the first surface 112 of the board 110 and includes an accommodating space 152 to accommodate the I/O ports 230 of the PCB 200.

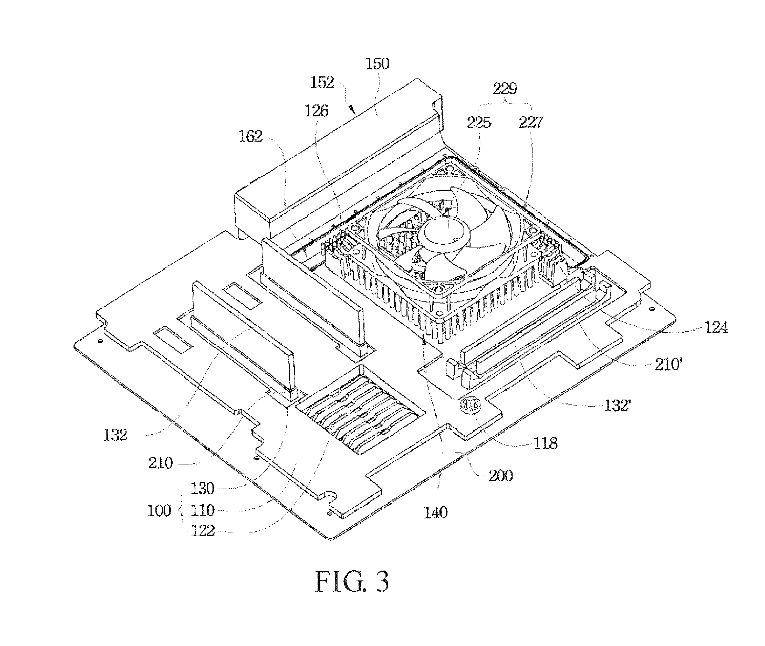

FIG. 3 is a schematic diagram showing the heat dissipating structure 100 and the PCB 200 of FIG. 1 in use. Please refer to FIG. 2 and FIG. 3, the heat dissipating structure 100 includes a hollow part 140 for a chip. The hollow part 140 exposes a chip 224 of the PCB 200, as shown in FIG. 1. In the embodiment, the chip 224 is a central processing unit (CPU), and a heat dissipating module 229 is usually disposed at the CPU. For example, the heat dissipating module 229 may include a fan device 225 and a heat sink 227. When the heat dissipating module 229 is assembled to the chip 224, the board 110 would not block the heat dissipating module 229 via the hollow part 140 of the heat dissipating structure 100.

The heat sinks 122, 124 and 126 are formed at the board 110, and the heat generated by the electronic elements at the PCB 200 is conducted to the heat sinks 122, 124 and 126 of the heat dissipating structure 100. The positions of the heat sinks at the board 110 correspond to the positions of the heat sources. For example, the heat sink 122 is disposed above the chip 222 (such as a south bridge chip or a display chip), and thus the heat generated by the chip 222 can be conducted to the heat sink 122. For example, the heat sinks 124 and 126 are disposed above the inductor 226 and the MOS 228, and thus the heat generated by the inductor 226 and the MOS 228 can be conducted to the heat sinks 124 and 126, and it is taken away via natural convection. The inductor 226 and the MOS 228 may be in a power supply circuit of the chip 224.

The heat sinks 124 and 126 are adjacent to the heat dissipating module 229, and thus the wind generated by the fan device 225 flows through the heat sink 227 and the heat sinks 124 and 126 to take away the heat via forced convection. When the heat dissipating structure 100 is assembled to the PCB 200, the interface card slot 210 is exposed in the interface card opening 130.

An interface card 132 (such as a display card or an audio card) is inserted into the interface card opening 130 and is fixed in the interface card slot 210, and a memory 132' is inserted into the memory slot 210', which would not be blocked by the board 110 of the heat dissipating structure 100. The heat dissipating structure 100 can cool multiple heat sources at the PCB 200 as long as the heat sinks 122, 124 and 126 are formed at the side of the board 110 opposite to the heat sources.

Thus, the number of the conventional heat dissipating modules disposed at the PCB 200 can be reduced, and the time and manpower for assembling can be saved. Moreover, the heat dissipating structure 100 covers the PCB 200 to protect the electronic elements at the PCB 200, and it has a dustproof function, which can extend the service life of the PCB 200.

The components and the connection therebetween illustrated in the previous embodiments are omitted in the following, and it would be illustrated that the heat dissipating structure 100 can selectively include a liquid heat dissipating module, a fan device and a heat pipe to help the heat sinks 122, 124 and 126 operate more efficiently.

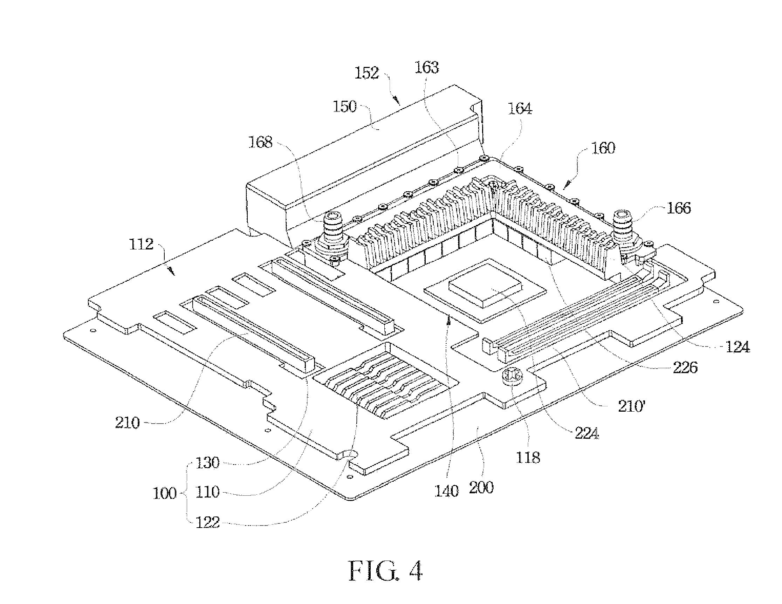

FIG. 4 is a schematic diagram showing a heat dissipating structure 100 covering a PCB 200 in a second embodiment. The heat dissipating structure 100 includes the board 110, the heat sinks 122, 124 and 126(as shown in FIG. 1) and the interface card opening 130. The difference between the embodiment and the first embodiment in FIG. 1 is that the heat dissipating structure 100 further includes a liquid heat dissipating module 160.

The liquid heat dissipating module 160 is disposed at the first surface 112 of the board 110 and is adjacent to the heat sink 124. The liquid heat dissipating module 160 includes a cover plate 164 and a flow channel 162 (as shown in FIG. 1). The flow channel 162 formed at the first surface 112 of the board 110 and it can accommodate liquid (such as water). The cover plate 164 is detachably fixed on the flow channel 162 via the screw 163, and it includes a liquid inlet 166 and a liquid outlet 168 connected to two ends of the flow channel 162, respectively.

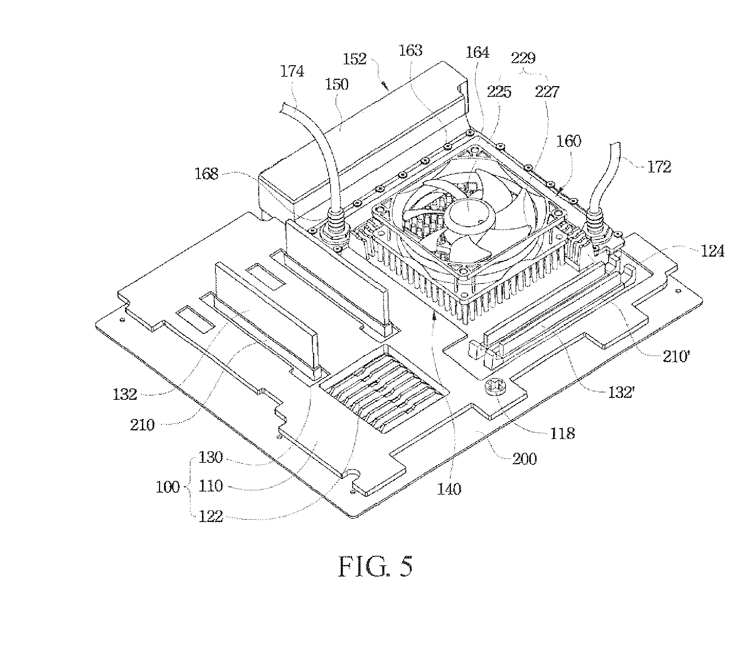

FIG. 5 is a schematic diagram showing the heat dissipating structure 100 and the PCB 200 of FIG. 4 in use. When the heat dissipating structure 100 is in use, the liquid inlet 166 and the liquid outlet 168 are connected to liquid transport tubes 172 and 174, respectively, and the liquid flows into the flow channel 162 (as shown in FIG. 1) from the liquid inlet 166 and flows out from the liquid outlet 168. Thus, the heat of the heat sink 124 and the heat sink 126 (as shown in FIG. 1) under the cover plate 164 can be taken away by the flowing liquid rapidly.

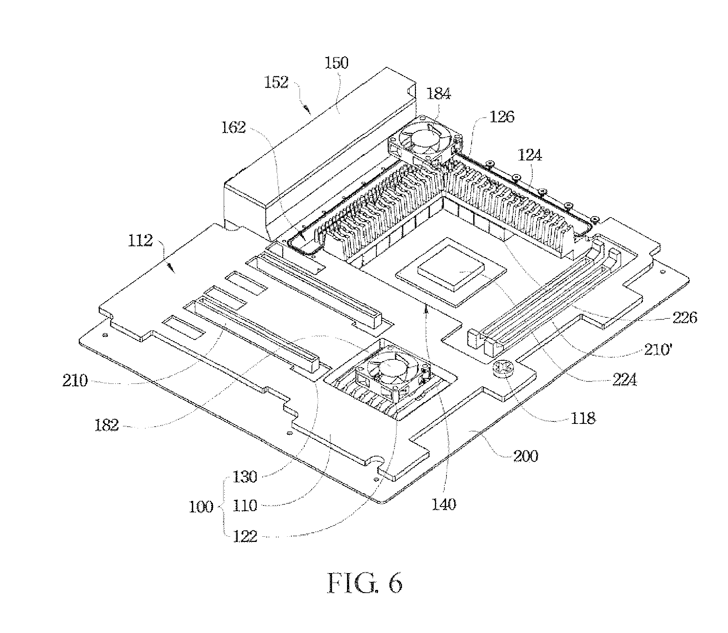

FIG. 6 is a schematic diagram showing a heat dissipating structure 100 covering a PCB 200 in a third embodiment. The heat dissipating structure 100 includes the board 110, the heat sinks 122, 124 and 126 and the interface card opening 130. The difference between the embodiment and the first embodiment in FIG. 1 is that the heat dissipating structure 100 further includes fan devices 182 and 184. The fan devices 182 and 184 are disposed at the first surface 112 of the board 110. The fan device 182 can generate wind to flow through the heat sink 122, and the fan device 184 can generate wind to flow through the heat sinks 124 and 126. Thus, the heat of the heat sinks 122, 124 and 126 can be taken away by the wind from the fan devices 182 and 184 rapidly.

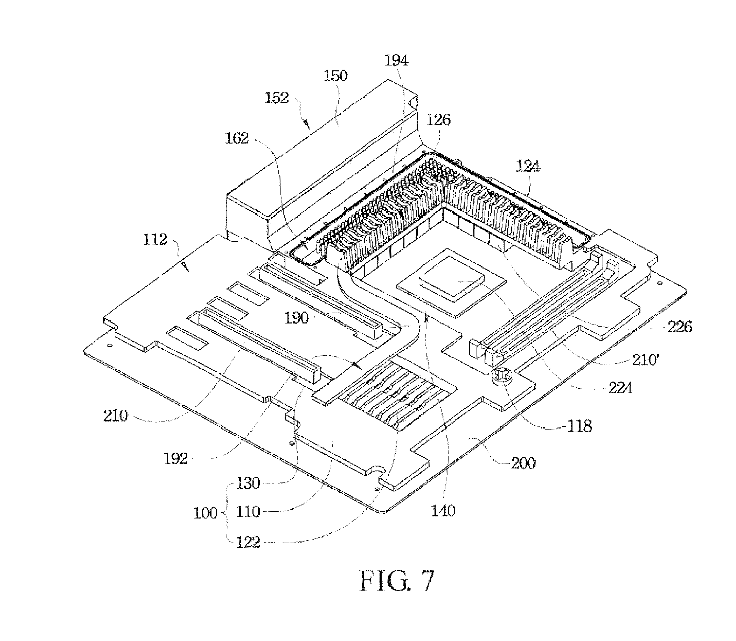

FIG. 7 is a schematic diagram showing a heat dissipating structure 100 covering a PCB 200 in a fourth embodiment. The heat dissipating structure 100 includes the board 110, the heat sinks 122, 124 and 126 and the interface card opening 130. The difference between the embodiment and the first embodiment in FIG. 1 is that the heat dissipating structure 100 further includes a heat pipe 190.

The heat pipe 190 is disposed at the first surface 112 of the board 110 and two ends 192 and 194 of the heat pipe 190 are connected to the heat sinks 122 and 124, respectively. The heat pipe 190 includes a capillary structure and water molecules. When the temperature of the two ends 192 and 194 of the heat pipe 190 is different, the water molecules in the higher temperature are in a gaseous state, and the water molecules in the lower temperature are in a liquid state. The water flows from the place of low temperature to that of high temperature through the capillary structure, so as to cool the heat sink.

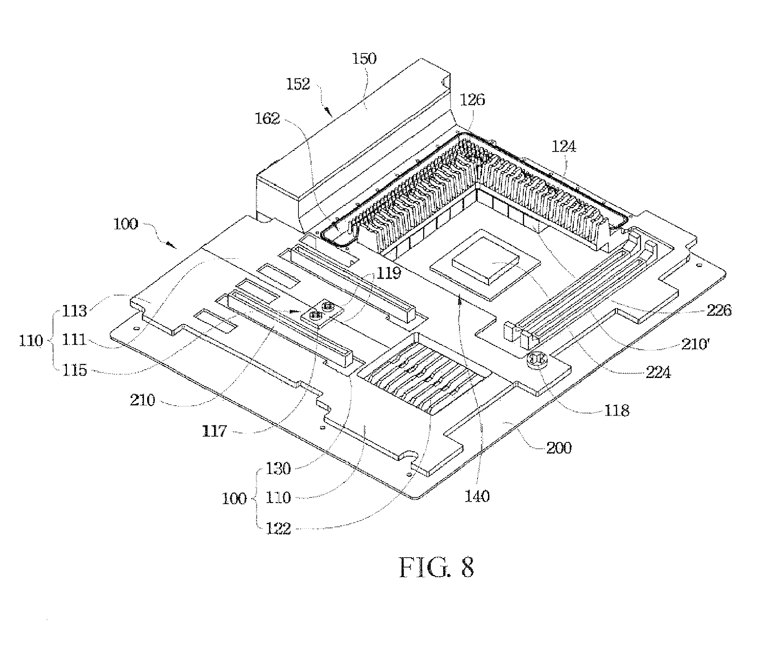

FIG. 8 is a schematic diagram showing a heat dissipating structure 100 covering a PCB 200 in a fifth embodiment. The heat dissipating structure 100 includes the board 110, the heat sinks 122, 124 and 126 and the interface card opening 130. The difference between the embodiment and the first embodiment in FIG. 1 is that the board 110 further includes a first sub board 111, a second sub board 113 and a fastening element 115. The fastening element 115 is disposed between the first sub board 111 and the second sub board 113 to connect them.

In the embodiment, the fastening element 115 includesa connecting sheet 117 and a screw 119, which is not limited herein. For example, the fastening clement 115 may also be a locker or a clamp as long as the first sub board 111 and the second sub board 113 can be connected to and detached from each other. Moreover, the number of the sub boards of the board 110 can be determined according to requirements, which is not limited herein.

The heat dissipating structure covers the PCB, and the heat sink is formed at the board. Thus, the heat generated by the electronic elements at the PCB can be conducted to the heat sink of the heat dissipating structure. When the temperature of the heat sink is higher than that of the circumstance, the heat is taken away via the natural convection. Since the position of the interface card opening of the heat dissipating structure corresponds to that of the interface card slot at the PCB, when the heat dissipating structure is assembled to the PCB, the interface card slot is exposed in the interface card opening, and the interface card can be inserted to the interface card opening and fixed to the interface card slot without blocking of the board of the heat dissipating structure.

Furthermore, the heat dissipating structure selectively includes a fan device, a heat pipe and a liquid heat dissipating module to improve the efficiency of the heat sink and cool multiple heat sources at the PCB at the same time, which can reduce the number of the conventional heat dissipating modules at the PCB and save the time and manpower for assembling.

Since the heat dissipating structure covers the PCB, it can protect the electronic elements at the PCB and has a dustproof function, which can extend the service life of the PCB.

The reader's attention is directed to all papers and documents which are filed concurrently with this specification and which are open to public inspection with this specification, and the contents of all such papers and documents are incorporated herein by reference.

## Claims

1. A heat dissipating structure 100 covering a printed circuit board (PCB) 200 which includes at least an interface card slot 210, **characterized in that** the heat dissipating structure 100 comprises:
a board 110 including a first surface 112 and a second surface 114 which are opposite to each other, wherein the second surface 114 faces the PCB 200;
at least a heat sink 122 formed at the first surface 112 of the board 110; and
at least an interface card opening 130 penetrating through the first surface 112 and the second surface 114 of the board 110 to make the interface card slot 210 exposed in the interface card opening 130.

2. The heat dissipating structure 100 according to claim 1, **characterized in that** the heat dissipating structure 100 further includes:
a fan device 225 disposed at the first surface 112 of the board 110.

3. The heat dissipating structure 100 according to claim 1, **characterized in that** the heat dissipating structure 100 further includes:
a heat pipe 190 disposed at the first surface 112 of the board 110, and two ends 192, 194 of the heat pipe 190 are connected to the heat sinks 122, 124, respectively.

4. The heat dissipating structure 100 according to claim 1, **characterized in that** the heat dissipating structure 100 further includes:
a liquid heat dissipating module 160 disposed at the first surface 112 of the board 110 and adjacent to the heat sink 124.

5. The heat dissipating structure 100 according to claim 4, **characterized in that** the liquid heat dissipating module 160 includes:
a flow channel 162 formed at the first surface 112 of the board 110 for accommodating liquid; and
a cover plate 164 detachably fixed on the flow channel 162 and including a liquid inlet 166 and a liquid outlet 168.

6. The heat dissipating structure 100 according to claim 1, **characterized in that** the heat dissipating structure 100 further includes:
a hollow part 140 for a chip to expose a chip 224 at the PCB 200.

7. The heat dissipating structure 100 according to claim 1, **characterized in that** the board 110 includes at least a hole 116, the PCB 200 includes a screw hole 202 corresponding to the hole 116, and a screw 118 penetrates through the hole 116 and meshes with the screw hole 202 of the PCB 200.

8. The heat dissipating structure 100 according to claim 1, **characterized in that** the board 110 includes:
a plurality of sub boards 111, 113; and
at least a fastening element 115 disposed between the sub boards 111, 113 to connect the sub boards 111, 113.

9. The heat dissipating structure 100 according to claim 1, **characterized in that** the heat dissipating structure 100 further includes:
an input/output (I/O) port accommodating part 150 disposed at the first surface 112 of the board 110, wherein the I/O port accommodating part 150 includes an accommodating space 152 to accommodate an I/O port 230 of the PCB 200.

10. The heat dissipating structure 100 according to claim 1, **characterized in that** the board 110 and the heat sink 122 are metal elements, heat dissipating plastic elements or ceramic elements, which are integratedly formed.
